# EUROPEAN PATENT APPLICATION

(11) **EP 2 530 663 A1**
(43) Date of publication of application: **05.12.2012**
(21) Application number: 12168330.4
(22) Date of filing: 04.06.2004
(51) Int. Cl.: G07F 19/00, G07D 7/00

(54) **Bill transaction system**

(30) Priority: 12.06.2003 JP 2003167388
(62) Divisional of application: 04013281.3
(71) Applicant: Hitachi-Omron Terminal Solutions, Corp., Shinagawa-ku Tokyo 141-8576 (JP)
(72) Inventor: Nagaya, Yuji, Tokyo, 100-8220 (JP); Uemura, Toshiro, Tokyo, 100-8220 (JP); Kagehiro, Tatsuhiko, Tokyo, 100-8220 (JP); Sako, Hiroshi, Tokyo, 100-8220 (JP)
(74) Representative: MERH-IP Matias Erny Reichl Hoffmann

(57) **Abstract**

An object of the present invention is to trace a user who has deposited bills as counterfeit bank notes into an ATM. The ATM having a bill deposit function judges a denomination and genuineness of bills deposited by the user by a validator, extracts bill information and stores in a search DB its bill information to be matched with an account number of the user (first data). It stores, in a trace DB, bill information of bills judged as counterfeit bank notes by the validator (second data). The search DB is searched with the second data as a key to extract similar bill data for specifying, from a result, the user who has used the bills as counterfeit bank notes.

## Description

### CROSS-REFERENCE TO RELATED APPLICATION

The present application claims priority from Japanese application JP 2003-167388 filed on June 12, 2004, the content of which is hereby incorporated by reference into this application.

### BACKGROUND OF THE INVENTION

The present invention relates to a bill transaction system. More specifically, the present invention relates to a bill information process system for handling information on bills judged as counterfeit bank notes and specifying the user of the bills in an ATM having a bill deposit function such as an ATM (automatic teller machine) and a money changer.

An ATM such as an ATM and a money changer has a validation part to judge the genuineness of bills deposited. When bills deposited into the machines are judged as counterfeit bank notes by the validation part, in order to check whether the bills are really counterfeit bank notes, it is important to handle the bills to be separate from genuine bank notes and to find the user of the bills for tracing the distribution route of the counterfeit bank notes.

In relation to this, for example, Japanese Unexamined Patent Publication No. 2000-322632 discloses a technique in which when a validation part validates bills as counterfeit, the physical features such as fingerprints of the user who has used the machine are stored in a memory together with information on the numbers of the bills and timestamp to trace the user based on the information.

### SUMMARY OF THE INVENTION

An object of the present invention is to provide an improved ATM for validation of bills and processing,of genuine and counterfeit bank notes.

Another object of the present invention is to provide a bill transaction system capable of searching information on held bills to specify the user of the counterfeit bank notes.

A system including an ATM handling bills deposited by a user according to the present invention has the features of claim 1. It may comprise a validator judging genuineness and denomination of bills; a storage safe box stacking bills judged as counterfeit bank notes or as doubtful by the validator; a first storage device storing information on bills deposited by the user and judged by the validator to be matched with information specific to the user; a second storage device sending bills stacked in the storage safe box for tracing the user to the validator to store information on the bills extracted by the validator; and check means for checking the bill information stored in the first storage device with the bill information stored in the second storage device, wherein after the check of the check means, the information specific to the user matched the similar bills is outputted from the first storage device.

In a preferable example, the first storage device stores bill information obtained by the validator in relation to an ID specific to the ATM and time at which the bills are transacted. The first storage device stores bill information obtained by the validator in relation to an ID specific to the validator and a version of a validation program.

More preferably, the ATM has a display operation part having a display operation screen guiding an operation of the user for transaction, the display operation part displaying guidance about an operation for extracting bill information from bills for tracing the user. After the judgement of the validator, when there are bills stacked in the storage safe box, the display operation part displays to the user a message that the bills cannot be deposited.

Preferably, the ATM, after the judgement of the validator, when there are bills stacked in the storage safe box, has printing means for printing on a printed medium a message that the bills must be inspected by a central bank to issue the printed medium as a receipt to the user of the bills.

In a preferable example, the first and second storage devices are formed in different areas of the same database.

A bill information process method according to the present invention in a bill transaction system having a bill deposit function has the steps of: judging genuineness of bills using a bill validator; temporarily stacking, in a storage safe box, bills judged as counterfeit bank notes or as doubtful in the validation; carrying, to the validator, bills judged as counterfeit bank notes or as doubtful in the validation and validated by the central bank to extract first bill information from the bills; obtaining second bill information from the bills deposited by the user by the validator to store it in a storage device; and searching the storage device with the first bill information as a key to obtain similar second bill information.

First bill information is preferably extracted by the validator of an ATM in which the bills have been used. For bills judged as counterfeit bank notes or as doubtful by the validator, a message that the bills are held by the bank for inspection is displayed on a display screen.

A bill transaction system according to the present invention in which a branch office system having an ATM handling bills deposited or withdrawn by the user and a center system having a host computer managing an account balance of a user transacted via the ATM are connected via a network, wherein the ATM has a deposit/withdrawal mechanism at least depositing and withdrawing bills; a validator judging genuineness and a denomination of bills deposited by the deposit/withdrawal mechanism; a first storage safe box stacking bills judged as genuine bank notes by the validator for recycling them for withdrawal; and a second storage safe box temporarily stacking bills judged as counterfeit bank notes or as doubtful by the validator, wherein the bill transaction system has a DB having a first storage part storing information on bills deposited by the user and judged by the validator to be matched with information specific to the user and a second storage part storing bill information of bills stacked in the second storage safe box for tracing the user and extracted from the validator, and a computer checking the bill information stored in the first storage part with the bill information stored in the second storage part, and after the check of the computer, outputs the information specific to the user stored in the first storage part matched with similar bill information.

In a preferable example, the computer is a personal computer having input means for inputting a condition for searching the DB about bills to be traced and display means for displaying the search condition and the check result of bill information and will be described as a terminal device 2 in an embodiment. The DB and the computer are provided in each branch office system.

A bill information process system according to the present invention in a bill transaction system performing a bill deposit process using an ATM, has: a deposit process mode judging genuineness of bills deposited using a validator, and when they are judged as genuine bank notes, updating an account balance of a user in a DB provided in a center; a first storage mode, after the validation of the bills judged as counterfeit bank notes or as doubtful by a central bank, judging the bills validated as counterfeit bank notes by the validator to obtain bill information for storing it in a storage device; a second storage mode judging the genuineness of the bills deposited by the user by the validator and storing the bill information in relation to information specific to the user in a storage device; and a search process mode, relating to the bill information stored in the storage device in the first storage mode, searching the bill information in the storage device stored in the second storage mode using a computer to obtain similar bill information.

Preferably, the second storage mode, each time the user performs deposit transaction by the ATM, creates a file including bill data created based on information obtained from the validator to store it in the storage device.

### BRIEF DESCRIPTION OF THE DRAWINGS

FIG. 1 is a diagram showing a bill transaction system of a bank to which an embodiment of the present invention is applied;
FIG. 2 is a block diagram showing the configuration of an ATM;
FIG. 3 is a schematic diagram of the operation in a bill data tracing system according to an embodiment of the present invention;
FIG. 4 is a diagram showing an example of the structure of a DB 4 for storing bill information and the result of tracing;
FIG. 5 is a diagram showing an example when category classifying bills validated by a validator;
FIG. 6 is a diagram showing a structure example of a file of bill data in a search DB 41;
FIG. 7 is a diagram showing the description of a search data file;
FIG. 8 is a diagram of assistance in explaining the contents of data of a whole header part;
FIG. 9 is a diagram of assistance in explaining the contents of data of an index part;
FIG. 10 is a diagram of assistance in explaining the contents of data of a bill data part;
FIG. 11 is a diagram showing structure examples of files in the search DB 41 according to another embodiment;
FIG. 12 is a flowchart showing a deposit process operation of an ATM according to an embodiment of the present invention;
FIG. 13 is a flowchart showing an operationwhen extracting bill data for tracing the user;
FIG. 14 is a diagram showing a display example of the operation of a guidance display part of an ATM about illegal bill handling in a deposit process;
FIG. 15 is a diagram showing an example of the receipt of bills issued from an ATM;
FIG. 16 is a diagram showing a display example of a guidance display operation part of an ATM when extracting bill data for tracing the user; and
FIG. 17 is a diagram showing an example of display guidance in a terminal device when executing a search engine for tracing the user.

### DESCRIPTION OF THE EMBODIMENTS

An embodiment of the present invention will be described below with reference to the drawings.

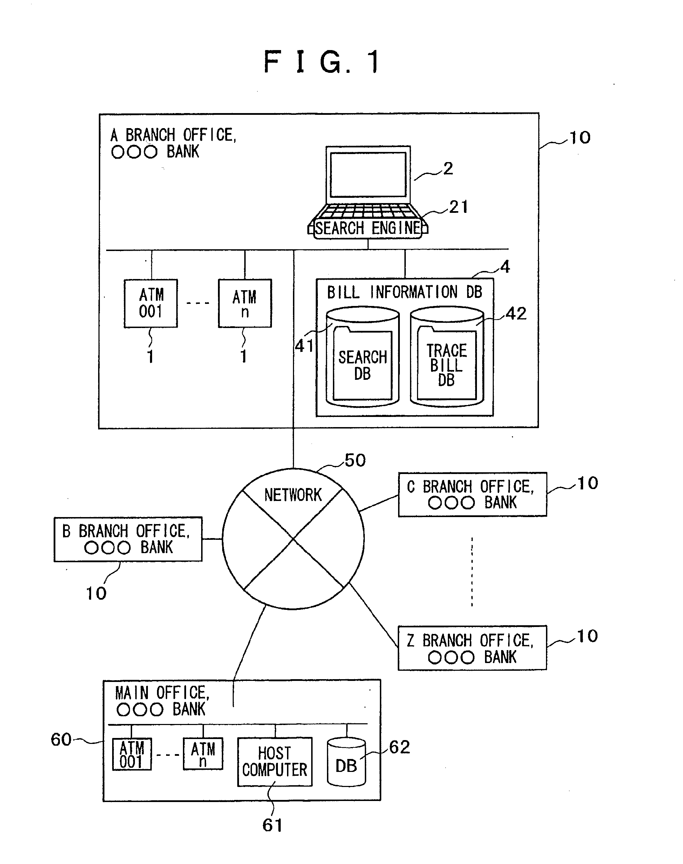

FIG. 1 is a diagram showing the entire system of a bank.

The bank system has a plurality of branch offices 10 and a main office 60 connected via a network 50. Each of the branch offices 10 has a plurality of ATMs 1, a tracing terminal device 2, and a database DB 4 storing bill information connected to a network such as a USB line or LAN in the branch office. It may include an ATM such as a money changer or a deposit-only device receiving bills as well as the ATMs 1. The ATM including the ATMs 1 in the bank system is given a specific identification code (ATM ID). A validator 3 in the ATM 1 is also given a specific identification code (a validator ID). They are for tracing the validator of the ATM in which counterfeit bank notes have been handled.

The terminal device 2 is, for example, a personal computer and has an input part, a display part, a storage part, and a processing unit. In the embodiment of the present invention, the processing unit functions as a bill search engine 21.

The bill information DB 4 has a search DB 41 and a trace bill DB 42. The search DB 41 stores bill data extracted by the validator 3. The trace bill DB 42 stores bill data to be traced. Their storage forms and operations will be described later in detail.

The main office 60 has the ATMs 1 connected to the network in it as in the branch offices and a function as a bank center. That is, the network is connected to a host computer 61 and a large-capacity DB 62. The host computer 61 performs an information process for business management of the entire bank system and performs an information process for a service to a customer of the bank, for example, an update process of an account balance. The DB 62 stores balance information corresponding to the account number of the user of the bank.

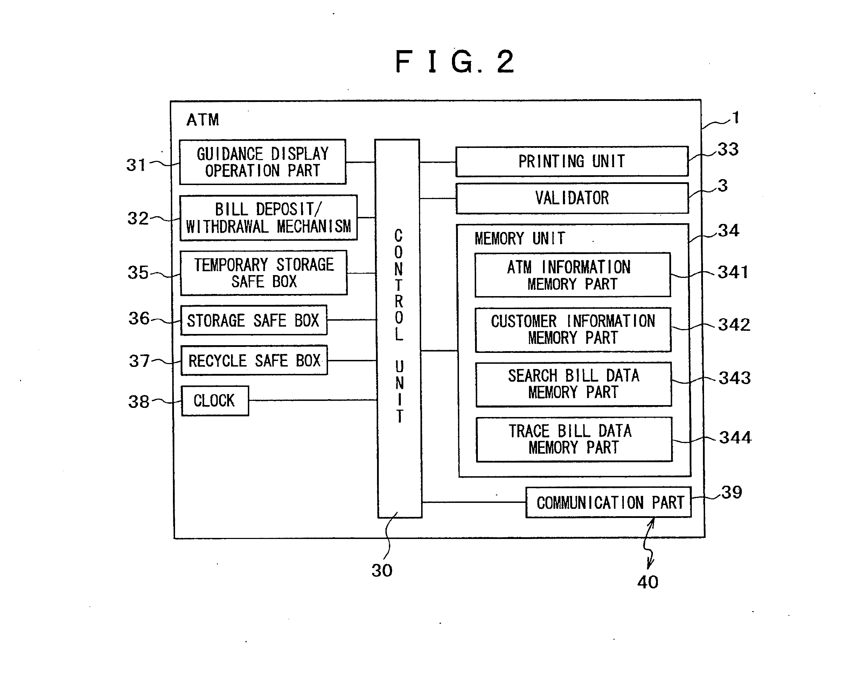

FIG. 2 is a block diagram of the ATM 1.

A control unit 30 has a processor, not shown, for controlling the entire ATM and controls units described below. A guidance display operation part 31 guides the operation of the user for ATM transaction and has, for example, a touch panel display device and an input part. A bill deposit/withdrawal mechanism 32 sets bills deposited or withdrawn into/from the ATM. A printing unit 33 prints transaction information on a printed medium such as a bankbook, a detailed statement or a receipt.

The validator 3 judges the size (length and breadth), the denomination and the genuineness of bills deposited. In the present invention, according to the result of judging, the later bill handling is different. Bill information extracted from the validator 3 is subject to a characteristic process.

A memory unit 34 stores transaction information and management information of the ATM 1. It has an ATM information memorypart 341, a customer information memory part 342, asearch bill data memory part 343 and a trace bill data memory part 344. The ATM information memory part 341 stores an ATM ID. The customer information memory part 342 stores transaction information of a customer. Being described later, the search bill data memory part 343 temporarily stores bill data extracted from the validator 3. The trace bill data memory part 344 stores bill data of bills to be traced.

A bill temporary storage safe box 35 temporality stacks bills validated by the validator 3 before being stacked in a storage safe box 36 or a recycle safe box 37. The recycle safe box 37 stacks bills validated as genuine bank notes by the validator 3 for recycling or reusing them for withdrawal. Typically, the ATM handles 1,000-yen bills and 10, 000-yen bills which are separately stacked in the recycle safe box 37. The storage safe box 36 is characteristic for this embodiment and stacks bills (categories 2, 3) judged as counterfeit bank notes or as doubtful by the validator 3. This process will be described later in detail.

A clock 38 performs timekeeping of a date and time. The timekeeping result is printed on the detailed statement of transaction or is stored in the memory unit 34. The control unit 30 is connected via a communication part 39 to a network 40.

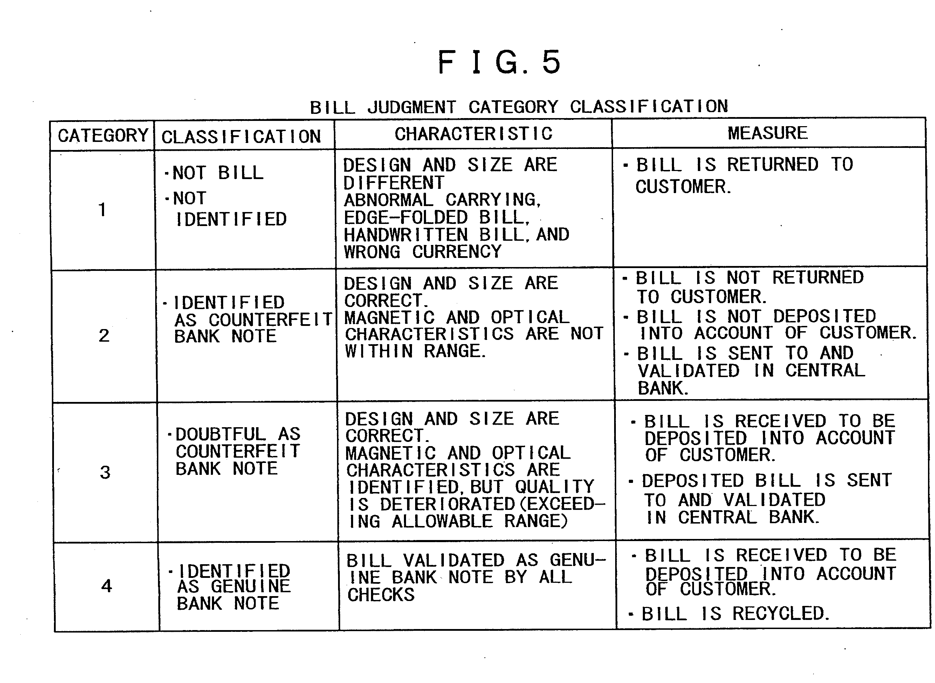

Bills a customer sets to the deposit/withdrawal bill setting part of the bill deposit/withdrawal mechanism 32 of the ATM 1 for deposit are carried to the validator 3 for judging the size, the denomination and the genuineness of the bills. As the result of judging, the bills are classified into four categories as shown in the table of FIG. 5.

### 1. Category 1: Not identified as a bill (mode 1)

The design and size are different. The bill is of the same size, but is damaged or folded. A folded ticket and a piece of paper are also included.

As a measure, the bill is carried to the bill deposit/withdrawal mechanism 32 to be returned to the customer.

### 2. Category 2: Identified as a counterfeit bank note (mode 2)

The results of judging the design and size are within the allowable range. The result of judging the denomination is within the allowable range. The magnetic and optical characteristics are not within the allowable range.

As a measure, the bill is not returned to the customer and is temporality stacked in the storage safe box 36. The money amount of the bill is not deposited into the account of the customer and is reserved. The bill is sent to and validated in the central bank.

### 3. Category 3: Identified as doubtful as a counterfeit bank note (mode 3)

The design and size are correct (the results of judging the size and the denomination are within the allowable range), but the characteristics are judged as being outside the allowable range. For example, this may occur due to variation in performance (the sensors) of the validator and due to variation in printed design of the bill.

As a measure, the bill is received in the ATM 1 to be stacked in the bill temporary storage safe box 35. The money amount is deposited into the account of the customer. The doubtful bill is sent to and validated in the central bank.

When a bank clerk collects the bills in the categories 2 and 3, the temporary storage safe boxes in the categories 2 and 3 may be separate so as to easily classify both.

### 4. Category 4: Identified as a genuine bank note (mode 4)

The results of judging the size, the denomination and the genuineness are all within the allowable range.

As a measure, the bill is received and the money amount is deposited into the account of the customer. To reuse it, it is stacked in the bill recycle safe box 37.

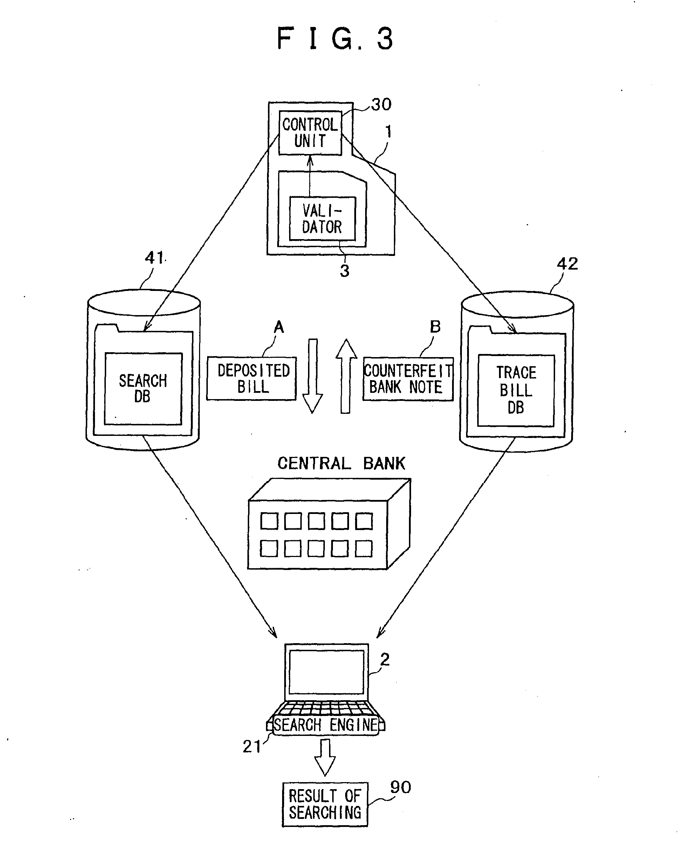

With reference to the schematic diagram of the bill data tracing system shown in FIG. 3, the validator 3 judges bills and classifies them into four categories and extracts necessary bill data from deposited bills to trace the user (depositor) of the ATM. The extracted bill data are temporarily stacked in the search bill data memory part 343 of the memory unit 34 under the control of the control unit 30. For a deposit process, transaction information (or deposited money amount) of the customer is stored in the customer information memory part 342 together with information specific to the customer, e.g. , the account number.

This embodiment has the bill information DB 4 in each of the branch offices. Information temporarily stored in the memory unit 34 in the ATM 1, particularly, the ATM information memory part 341, the customer information memory part 342, and the search bill data memory part 343 is gathered in the branch offices to be stored in the search DB 41 (a second storage mode).

Bills A judged as being in the category 2 or 3 and stacked in the storage safe box 36 must be validated in detail whether they are genuine bank notes or not. The bills A are sent to the central bank. The central bank validates the received doubtful bills A in detail. The result of validating including the target bills is returned to the bank. In this embodiment, bills B judged as counterfeit bank notes are used for tracing the depositing person.

In the bank, in order to use information on the returned bills B to extract data for tracing the user, the bank clerk deposits the bills B into the ATM 1 in which they have been initially deposited to obtain bill data from the result of validating. The reason why the validator 3 of the same ATM 1 extracts the bill data is that since the sensitivity of the sensor for bill validation is varied in each of the ATMs, it is preferable to perform the extraction in the ATM in which the bills have been initially handled.

The bill data extracted from the bills B in the validator 3 are temporarily stacked in the trace bill data memory part 344 in the ATM 1 and are transferred from the ATM 1 to be stored in the DB 42 (a first storage mode).

A terminal device 8 uses a search engine 21 functioning by the processing unit to search the search DB 41 for checking bill data 42' to be traced with bill data 41' stored in the search database 41, thereby detecting the bill data 41' matched with the bill data 42' to be traced. Consequently, a bill tracing result 90 is outputted from the terminal device 8. With reference to the result, the user who has deposited the bills B validated as counterfeit bank notes can be specified.

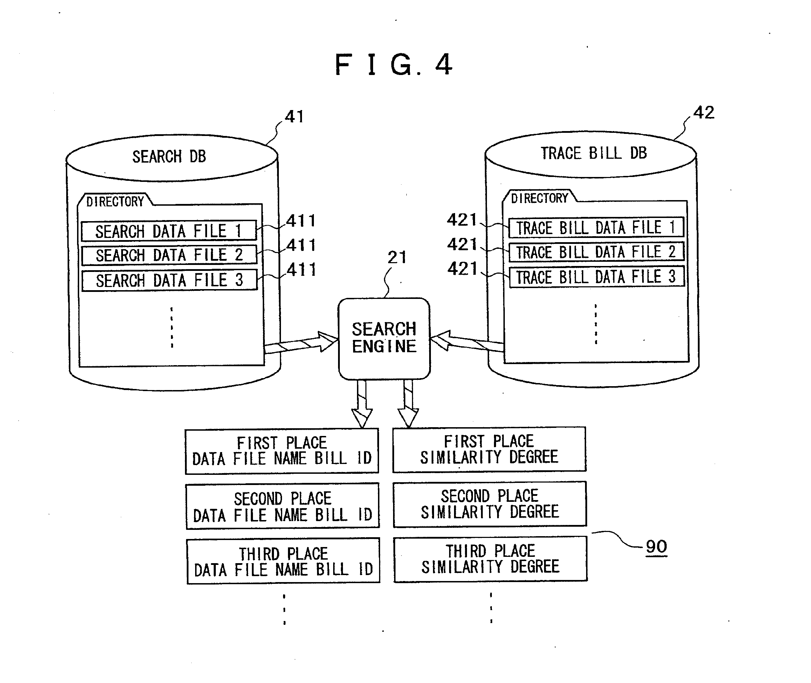

FIG. 4 is a diagram showing an example of the structure of the DB 4 for storing bill information in the bill tracing system and the process result 90 by the search engine 21.

The search DB 41 stores bill data extracted when the user deposits bills into the ATM as a search data file 411 together with transaction data (that is, deposited/withdrawn money amount and information specific to the user such as an account number). One search data file 411 may be for each deposit/withdrawal transaction of the user or may be for each bill transacted.

The trace bill data DB 42 stores bill data of bills of the user to be traced. The trace bill data is structured as one trace bill data file 421 for each extraction in which the validator 3 extracts image information of target bills from the result read from the optical or magnetic sensor. Bill data extracted by the carrying state (e.g., the carrying speed) of the bills of the validator 3 may be varied. Extraction of data of the same bill is preferably performed a plurality of times. This can be extracted by carrying the same bills in the validator 3 a plurality of times.

The extracted bill data file 421 is used for comparison and check with the bill data stored in the search DB 41. The dependence on the carrying state is reduced to trace bills. This is performed by searching the search DB 41 using the search engine 21 to sequentially compare and check the bill data 42' to be traced with a plurality of bill data 411 stored in the search DB 41. After the comparison and check, the similar bills are searched to be ordered by the match degree. The search data file name 411 and the bill ID of the search DB 41 are outputted to the display part, not shown, of the terminal device 2 or the printing part. Based on transaction information including personal identification information stored together with the bill data, the user who has deposited the bills can be specified. At the same time, the similarity degree (given a degree such as a similarity degree: 80%) is outputted. The similarity degree is a tracing accuracy validation reference.

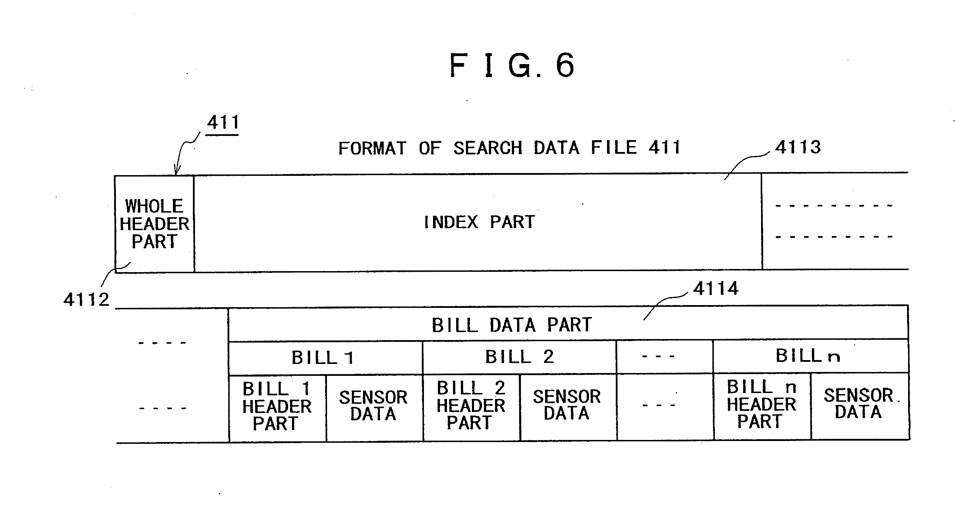

FIGS. 6 to 10 show structure examples of the search data file.

FIG. 6 shows the structure of the search data file.

In the example shown in FIG. 6, one search data file 411 is formed each time the user performs deposit transaction by the ATM to be stored in the DB 41.

One file has a whole header part 4112, an index part 4113 and a bill data part 4114. When a plurality of bills are deposited at the same time by one transaction, bill data per the plurality of bills is stored in the bill data part 4114.

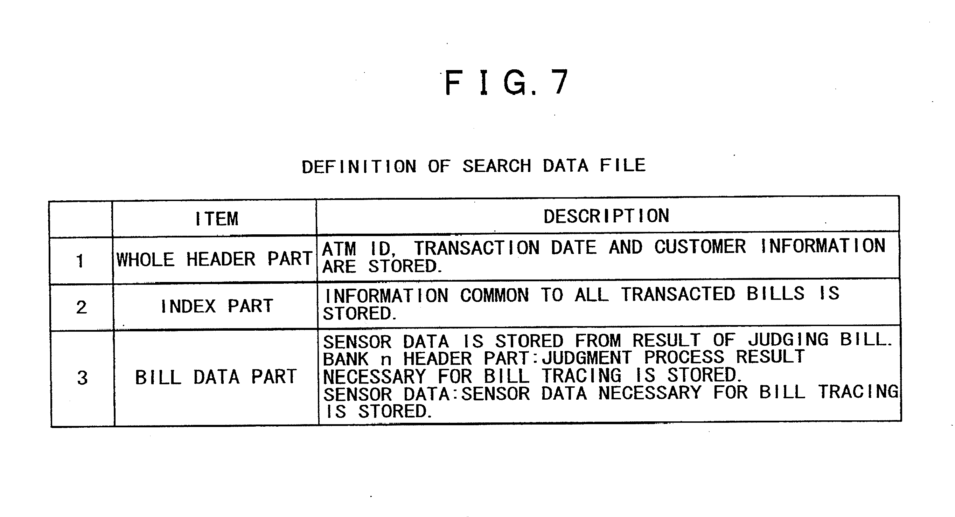

FIG. 7 shows the definition of the parts of the search data file.

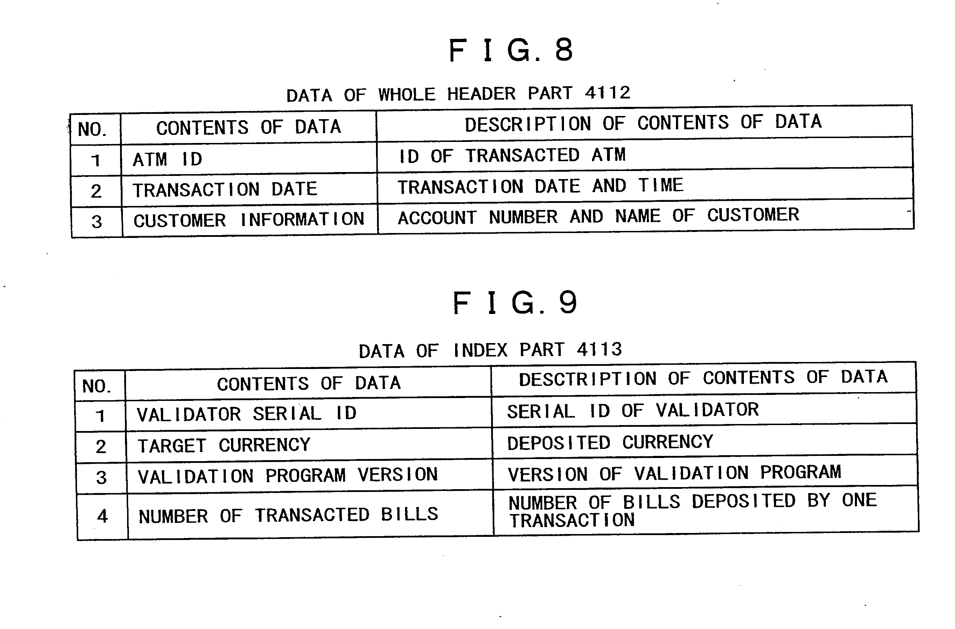

The whole head part 4112 of a file has an area storing an ATM ID, transaction date and customer information. As the detail is shown in FIG. 8, the ATM ID is an ID for identifying an ATM and indicates the ID of an ATM into which bills have been deposited. The transaction date is a transaction date and time. The customer information is the account number and name of a customer.

The index part 4113 is a part storing information common to all bills. As the detail is shown in FIG. 9, this part stores a serial ID as identification information of the validator 3, a currency to be deposited, the version of a validation program, and the number of bills deposited by one transaction.

When performing search by the search engine 21, bills to be traced selected from the trace bill DB 42 is compared and checked with bill data of search of the same currency. Information on the target currency is key data searching the target bill data. The contents of bill data may be different depending on the version of the validation program. The search engine 21 refers to version information of the validation program to perform a check process according to the version.

Information on the number of bills transacted is referred to find how many bill data are stored in the bill data part 4114. The serial ID of the validator is held in the memory in the validator 3.

The bill data part 4114 of FIG. 6 stores sensor information for each bill from the result of judging a bill obtained from the validator 3. Image information of a bill obtained by A/D converting a read signal from the read result of the bill by the optical sensor or the magnetic sensor is stored.

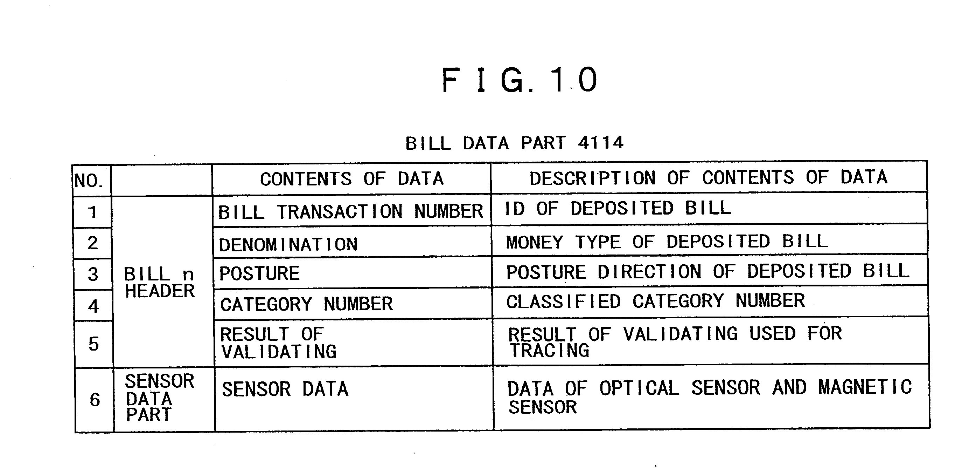

FIG. 10 shows the detailed contents of the bill data part 4114. The bill n header part stores a bill transaction number, denomination, posture, category numbers and result of validating. The bill transaction number is a bill ID indicating the deposit order when a plurality of bills are deposited at the same time into the ATM. The denomination is denomination information of deposited bills, and the posture is the posture direction of deposited bills. The category numbers are four classification numbers judged by the validator 3. The result of validating is a result judged by the validator 3, and the result of judging necessary for comparison and check of the search engine 21 is stored. The sensor data part stores data of the optical sensor or the magnetic sensor used by the search engine 21.

The structure of the trace bill data file 421 is the same as the form of the search data file 411. As compared with the search data file 411, information on the account number of a customer (FIGS. 6 to 10) is unnecessary.

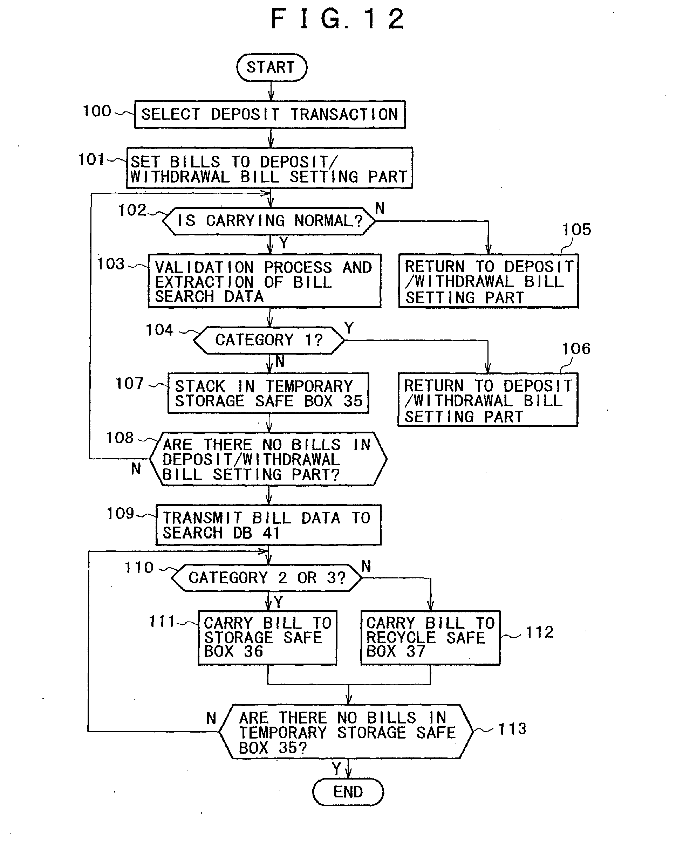

FIG. 12 is a flowchart of assistance in explaining a deposit process operation by the ATM according to an embodiment.

The user selects "deposit transaction" from the transaction items displayed on the guidance display operation part 31 of the ATM 1 (S100). When the user sets bills to the deposit/withdrawal bill setting part of the bill deposit/withdrawal mechanism 32 (S101), the bills are taken in one by one to be carried to the validator 3. The validator 3 judges the carrying state (S102). When the bills are carried in the state that the tilt of the bills is extremely large, the bills are carried on the end side of the carrying path exceeding the allowance range, or the overlapped bills are carried, the bills are returned to the deposit/withdrawal bill setting part (S105).

The correctly carried bills are subject to a validation process of the denomination and the genuineness by the validator 3. To trace the bills, search bill data are extracted (S103). After the validation process (S103) of the validator 3, the bills not identified as bills (category 1) are returned to the deposit/withdrawal bill setting part (S106). After the validation process, the bills judged as being in the categories 2, 3 and 4 are temporarily stacked in the temporary storage safe box 35 (S107). The above process operation is repeated until there are no bills in the deposit/withdrawal bill setting part (S102 to S108). The above process is repeated until there are no bills set to the deposit/withdrawal bill setting part (S108).

The bill data is once stored in the memory unit 34 in the ATM 1, that is, information on the money amount judged as genuine bank notes and the account number of the customer is stored in the customer information memory part 342. Bill data including the image of the bills is stored in the search bill data memory part 343. When obtaining of bill data from all bills deposited is ended, the bill data is transferred from the memory unit 34 of the ATM 1 via the network in the branch office to the search DB 41 together with related information shown in FIGS. 8, 9 and 10 and is stored in the DB 41 in the form shown in FIG. 6 (S109).

When the transmission of the bill search data is ended, the bills stacked in the temporary storage safe box 35 is carried to and stacked in the recycle safe box 37 or the storage safe box 36. In this case, the bills judged as being in the category 4 (genuine bank notes) are carried to and stacked in the recycle safe box 37 (S112). The bills judged as being in the category 2 or 3 are carried to and stacked in the storage safe box 36 (S111). When all the bills temporarily stacked in the temporary storage safe box 35 are stacked in the related storage safe boxes 36, 37, the deposit process is ended (S113).

When a series of deposit process of the customer is ended, deposit data stored in the memory unit 34 is transmitted via the network 50 to the main office 60 together with customer information. The account balance of the DB 62 is updated under the process of the host computer 61.

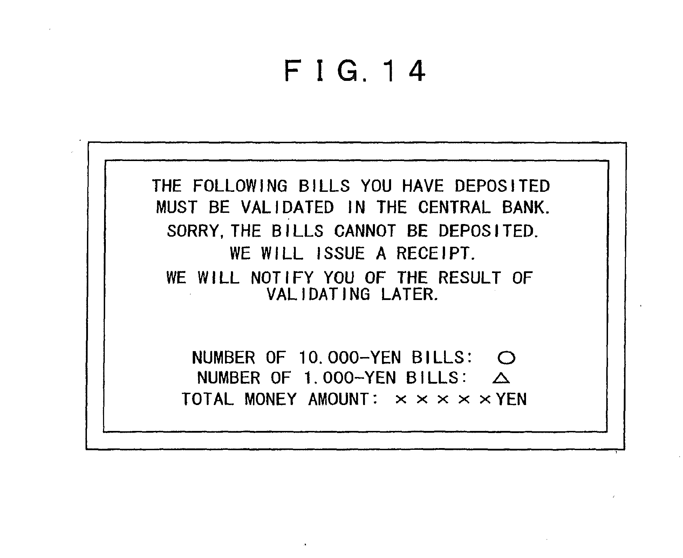

FIG. 14 shows a display example of display guidance of the ATM about handling of illegal bills in the deposit process. That is, it is a display example of the guidance display operation part 31 when deposited bills are judged as being in the category 2 by the validator 3. Since the bills judged as being in the category 2 are not deposited in the account of the customer, a message that "The bills you have deposited must be validated in the central bank. Sorry, but the bills cannot be deposited. We'll issue a receipt. We'll notify you of the result of validating later." is displayed as guidance.

The denomination of the bill judged as being in the category 2, the number of the bills and the total money amount are also displayed. The display is performed when all the bills set to the deposit/withdrawal bill setting part are validated and bill data to the customer is transmitted to the search DB 41 (FIG. 12, S109). In this stage, the number of genuine bank notes and the number of bills in the category 2 or 3 are found with reference to data in the memory unit 3. The control unit 30 can easily perform control to calculate and display the number of them and total money amount.

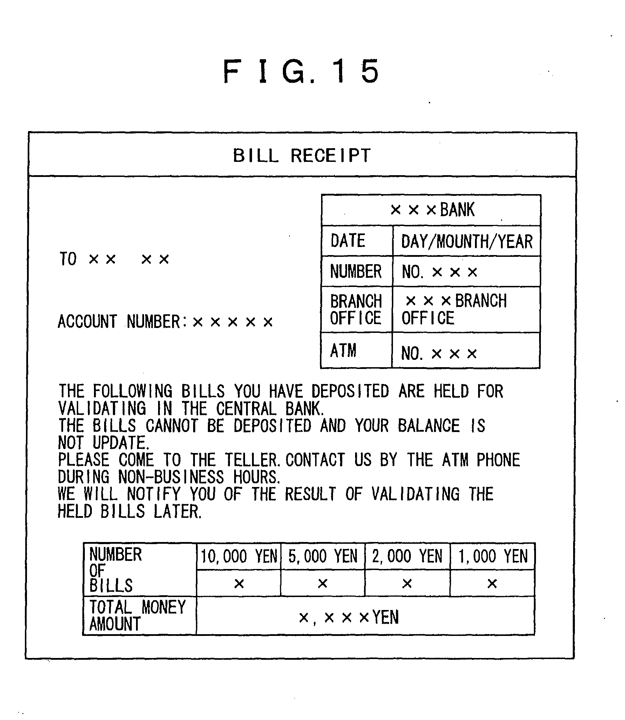

A bill receipt as shown in FIG. 15 is issued to the customer taken measures according to the display of FIG. 14.

This transmits information obtained from the memory unit 34 for the display of FIG. 14 to the guidance display operation part 31 and also transmits it to the printing unit 33. The printing unit 33 prints the guidance and money amount as shown in FIG. 15 on the bill receipt to issue it from the ATM 1 to the customer.

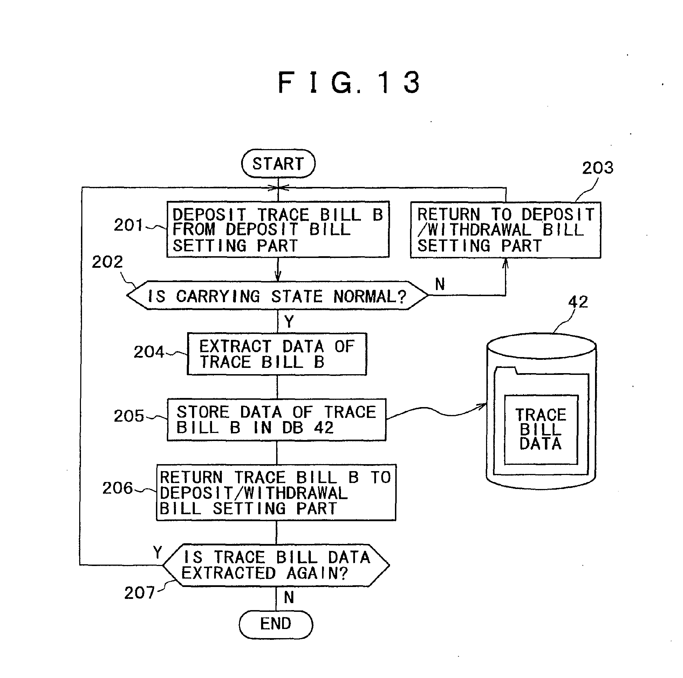

FIG. 13 is a f lowchart showing an operation when extracting bill data for tracing the user.

Bills corresponding to the categories 2 and 3 stacked in the storage safe box 36 are validated in detail by the central bank. After the validation, the bills B judged as "counterfeit bank notes" are returned to the bank. To trace the person depositing the same bills as the returned bills B, the bank deposits the bills B into the initiallyvalidated ATM 1 to extract bill data for tracing by the validator 3.

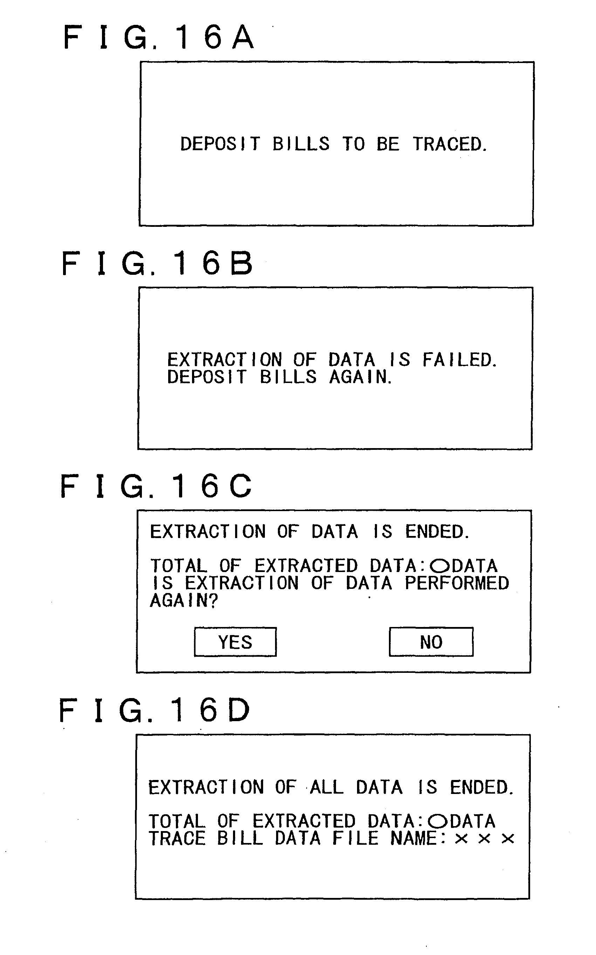

When performing the process operation of FIG. 13, the guidance display of FIG. 16 is displayed. FIG. 16 is an example of guidance displayed on the screen of the guidance display operation part 31 of the ATM 1 when extracting bill data.

According to guidance of FIG. 16A that "Deposit bills to be traced. " , the bank clerk deposits the bills B to be traced into the deposit/withdrawal bill setting part (S201). The bills are carried from the deposit/withdrawal bill setting part to the validator 3. The validator 3 checks the carrying state of the tilt of the carried bills (S202). When the tilt of the bills is larger than a predetermined value, they are rejected to be returned to the deposit/withdrawal bill setting part (S203). In this case, guidance display of FIG. 16B that "Extraction of data is failed. Deposit the bills again. " is performed to prompt to deposit the bills B again from the deposit/withdrawal bill setting part.

When the bills are normally carried, the validator 3 extracts bill data for tracing (S204). The trace bill data is stored in the trace DB 42 (S205). When the storage process is ended, the bills B are returned to the deposit/withdrawal bill setting part (S206). The display screen displays a message that extraction of data is ended, as shown in FIG. 16C, and displays the total of the number of the extracted data. Whether extraction of data is performed again is inquired (S207). When the bills B are left in the hand of the clerk and bill data must be extracted, or when bill data of the same bills B must be obtained again, "YES" is operated. When ending the extraction of bill data, "NO" is operated.

When "YES" is selected, S201 to S207 are repeated. When "NO" is selected, as shown in FIG. 16D, amessage that extraction of all bill data is ended is displayed. The total of the extracted data and the data file name of the trace bill stored in the trace DB 42 are displayed. Any data file name can be given by inputting from the guidance display operation part 31 by the clerk.

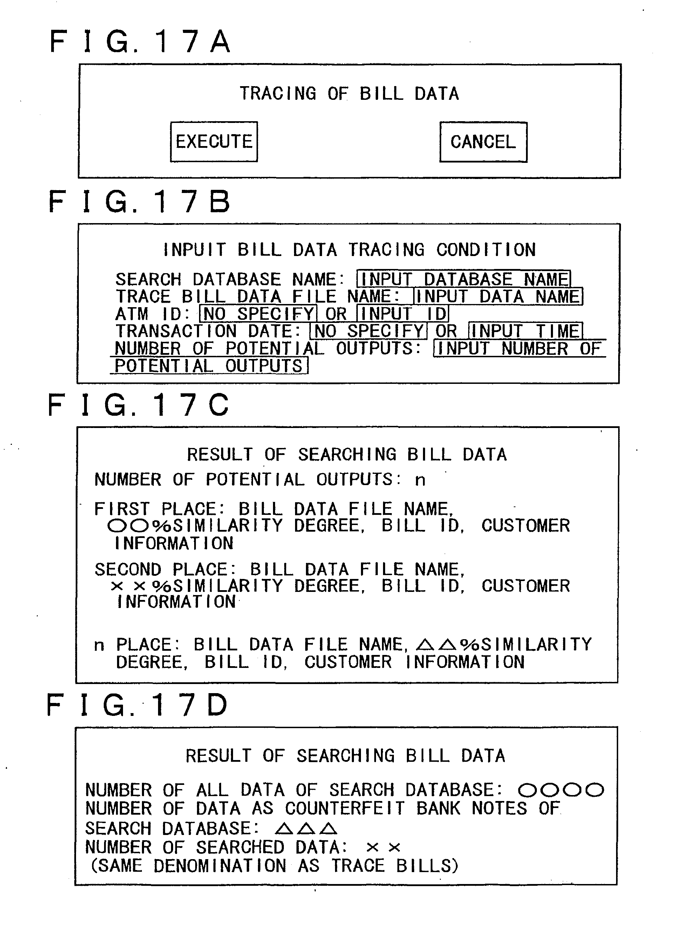

FIG. 17 is a diagram showing an example of display guidance in the terminal device when executing the search engine 21 for tracing the user.

When starting the search engine 21, the display screen displays guidance inquiring the tracing of bill data, as shown in FIG. 17A. When tracing the bill data, "Execute" is selected. When not tracing it, "Cancel" is selected.

When the execution of the tracing of the bill data is selected, as shown in FIG. 17B, a screen inputting a bill data tracing condition is displayed. To select the target search DB, the name of the search DB 41 is inputted. In this embodiment, the search DB 41 exists in each of the branch offices 10, and the terminal device 2 performing a search operation also exists in each of the branch offices. The search DB 41 in the branch office 10 may be selected. In an alternative example, the DB 41 in another branch office can also be specified.

When selecting the search DB 41, the name of the search DB 41 may be inputted from a keyboard. Alternatively, the names of all the search DBs 41 may be displayed on the display screen to specify the target DB 41.

The name of the bill data file 421 of bills to be traced is inputted. All the trace bill data file names may be displayed on the screen to specify and input the target data file name.

The ATM to be searched is specified by specifying the ATM ID as identification information of the ATM. When the ATM in which the bills B as counterfeit bank notes are deposited by the user is previously found, its ATM ID is inputted. When the ATM in which the bills B have been handled is not found, or when all the ATMs are targeted, "No specify" is inputted.

When specifying the ATM ID, only bill data deposited into the specified ATM is targeted and searched.

When the transaction date of bills to be traced which have been deposited by the user is previously found, the transaction date is inputted. When it is not found, "No specify" is inputted. When specifying the transaction date, only bill data deposited on the specified transaction date is targeted and searched from the data file stored in the search DB 41. For the input of the transaction date, when only the year of the deposit date is found, only the year may be inputted, and when only the month is found, only the month may be inputted. The number of potential outputs is inputted. The maximum number of potential outputs is specified.

When necessary items are inputted on screen (B) to specify search execution, the search engine 21 searches the specified search DB 41 under the specified condition. After the search, bill data similar to the trace bill data B is extracted.

FIGS. 17C and 17D are screen display examples showing the search execution results of bill data. The results of tracing the specified number of potential outputs are displayed in order of decreasing similarity degree to the trace bill data B. The similarity degree indicating the match degree, the bill ID and customer information are extracted from the target data file stored in the search DB 41 together with their names and are displayed on the screen. As shown in FIG. 17D, the number of all bill data in the search DB 41, the number of bill data validated as being in the category 2 or 3, and the number of searched bill data, that is, the number of bill data of the same denomination as the trace bill are displayed.

After the search process, the customer can be specified from the account number of the customer who has deposited the bills to be traced and having a high similarity degree. After that, the bank may contact a criminal investigation organization.

An embodiment is described above. The present invention is not limited to the above embodiment and various modifications can be made and embodied.

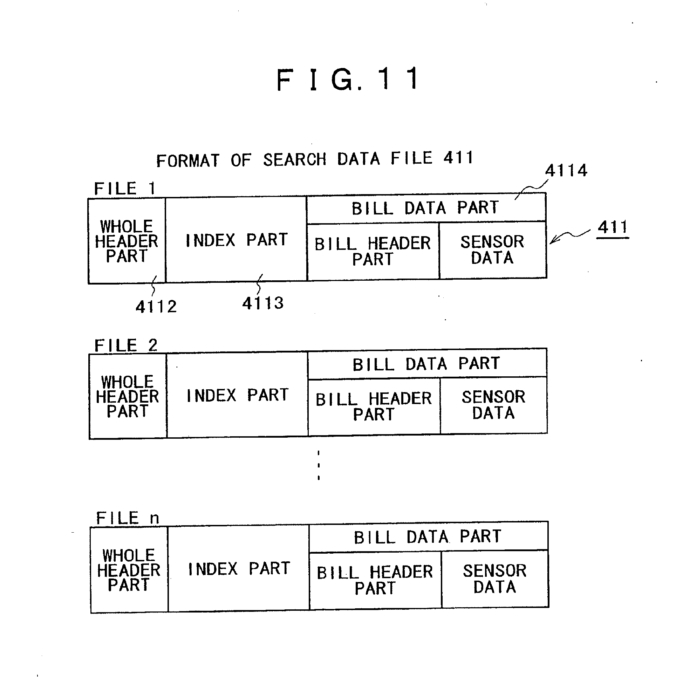

The file of bill data stored in the search DB 41 can be formed as shown in FIG. 11. This example is an example in which one file is formed for each deposited bill to be stored in the search DB 41.

The contents of the whole header part 4112, the index part 4113 and the bill data part 4114 consisting of one file are the same as those shown in FIGS. 8 and 10. Since one file is stored for each bill, information on the number of transacted bills of the index part 4113 and the bill transaction number of the bill n header part is unnecessary.

As an alternative example of the deposit process operation of the ATM, the transmission step (S109) of bill data to the search DB 41 in the flowchart shown in FIG. 12 can be changed.

In FIG. 12, after the data process of all the deposited bills is ended, bill data of all the bills is transmitted together to and stored in the search DB 41 (S109). In a modification example, bill data extracted by the validator 3 for each depositing bill may be transmitted to the search DB 41.

This can be changed by moving the transmission (S109) of bill data to the search DB 41 in the flowchart of FIG. 12 between S104 and S107. In this case, bill data extracted from each bill is formed as in the format shown in FIG. 11 to be stored in the search DB 41.

As another modification example, a location having the search DB 41 can be variously modified.

In the embodiment shown in FIG. 1, the search DB 41 is provided in each of the branch offices. The DB 41 may be provided in each of the ATMs 1. All the search DBs 41 may be integrated to be provided in the DB 62 of the main office 60. As a further modification, without considering the boundary between the branch office and the main office, the DB 41 may be provided to be common to a plurality of ATMs in each area.

The trace DB 42 may be variously modified and provided as in the above search DB 41. The trace DB 42 is not provided in the same storage device as the search DB 41 or is not provided in the same location, and may be separated from the search DB 41 to be provided in the DB 62 in the main office 60, thereby being shared to be accessed from all the search DBs 41.

Extracting trace bill data from the bills B returned from the central bank is performed by depositing them into the initial ATM in the above embodiment. This is not limited. It may be performed by another ATM or the ATM in the main office.

### Another embodiment:

Other that the above, the followings will be listed.
(1) A bill information process system in which the whole header part of the file stores information on a date on which the user uses an ATM, the ID of the used ATM, and data including the account number of the user, the index part stores the ID of the validator, the target currency, and data about the number of transacted bills, and the bill data part stores the IDs of the bills obtained from the validator and image information of the bills obtained from the sensor.
(2) A bill information process system which specifies the ATM in which bills validated as counterfeit bank notes by the central bank are handled with reference to the storage device, deposits the bills into the specified ATM, and validates the bills by the validator to obtain information on the bills.
(3) A bill process method using the account number of the user as information specific to the user.
(4) A bill transaction system in which the second DB is provided in the ATM and the computer is provided in the center system.
(5) A bill transaction system in which the display means displays a plurality of candidates of the check result of bill information in order of decreasing similarity degree.
(6) A system in which the computer has a search engine.

According to the present invention, for bills judged as counterfeit bank notes by the validator, bill information necessary for tracing the user is obtained to be stored in the storage device.

The held bill information is checked with bill information extracted by normal deposit transaction to be stacked in the storage device to specify the user who has used the bills.

## Claims

1. An ATM handling bills deposited by a user comprising:
a deposit/withdrawal bill setting part (32),
a validator (3) judging genuineness and a denomination of bills; said validator (3) being configured to judge bills as genuine banknotes, as counterfeit bank notes or as doubtful bank notes,
a temporary storage safe box (35) stacking temporarily bills judged by the validator (3);
storage safe boxes (36; 37) for stacking bills stacked in the temporary storage safe box (35), wherein bills judged as genuine bank notes and being to be reused are transferred to a first storage safe box (37) different from a second storage safe box (36) for stacking bills judged as doubtful bank notes.

2. The ATM according to claim 1,
wherein bills judged as counterfeit bank notes or as doubtful by the validator (3) are stacked separately.

3. The ATM according to claim 1 or 2,
wherein the ATM has a communication part (39) for outputting, if bills deposited by the user are judged as genuine bank notes or doubtful bank notes, data for updating an account balance of the user regarding the doubtful bank notes, and/or for outputting, if bills deposited by the user are judged as counterfeit bank notes, data for not updating an account balance of the user regarding the counterfeit bank notes.

4. The ATM according to claim 1 or 2,
wherein the ATM has a communication part (39) for outputting bill information extracted by the validator (3), and, after the communication part (39) outputs the bills information, the bills stacked in the temporary storage safe box (35) are carried to the storage safe boxes (36, 37).

5. The ATM according to claim 1 or 2,
wherein the ATM has a communication part (39) for outputting bill information extracted by the validator (3), wherein, after all the bills judged as genuine, counterfeit or doubtful bills by the validator (3) are stacked in the temporary storage safe box (35), the communication part (39) outputs the bill information.

6. The ATM according to any of the preceding claims,
wherein the ATM is configured to return bills judged as not being bank notes by the validator (3) to the deposit/withdrawal bill setting part (32).

7. A bill transaction system having a bank branch office system comprising a plurality of branch offices (10) each having an ATM executing transaction of deposit/withdrawal of bills, wherein the ATM has a deposit/withdrawal mechanism depositing and withdrawing bills; a validator (3) judging genuineness and a denomination of bills deposited by the deposit/withdrawal mechanism; a temporary storage safe box (35) for stacking temporarily bills judged by the validator (3); and storage safe boxes (36, 37) for stacking bills stacked in the temporary storage safe box (35); a bank office (60) having a host computer (61) managing an account balance of a user via the branch office (10)system and being connected to said plurality of branch offices (10) via a network, wherein the bill transaction system has a first storage part storing information on deposited bills judged by the validator (3) together with information specific to the user and a second storage part storing bill information for tracing, said first storage part stores, after all the deposited bills are judged by the validator (3), information on deposited bills judged by the validator (3), and bills judged as genuine bank notes and being to be reused are transferred to a first storage safe box different from a second storage safe box for stacking bills judged as doubtful bank notes.

8. The bill transaction system according to claim 7, wherein the bill transaction system has a device (2), the device (2) checks the bill information stored in the first storage part with the bill information stored in the second storage part, and after the check of the device (2), outputs the information specific to the user stored in the first storage part matched with similar bill information.

9. The bill transaction system according to claim 7 or 8, wherein bills judged as counterfeit bank notes or as doubtful by the validator (3) are stacked separately in the second storage safe box (36), and, for bills deposited by the user and judged as counterfeit bank notes, the account balance of the user is not updated, whereas for bills deposited by the user and judged as doubtful bank notes, the account balance of the user is updated.

10. The bill transaction system according to claim 7, 8 or 9,
wherein the first and second storage part are provided in each ATM and the device (2) is provided in each branch office.

11. The bill transaction system according to claim 7, 8, 9 or 10,
wherein the device (2) has input means for inputting a condition for searching about bills to be traced, and display means for displaying the search condition and the check result of bill information.

12. A bill information process method comprising the steps of:
judging genuineness of bills using a bill validator (3);
stacking, in a temporary storage safe box (35), bills judged as genuine bank notes, counterfeit bank notes or as doubtful in the validation;
carrying, to a storage safe box, bills judged as genuine bank notes, counterfeit bank notes or as doubtful in the validation after all the bills set in a deposit/withdrawal bill setting part (32) are judged by the validator (3).

13. The bill information process method according to claim 12,
wherein bills judged as not being bank notes by the validator (3) are returned to the deposit/withdrawal bill setting part (32).

14. The bill information process method according to claim 12 or 13, comprising the further steps of outputting, if bills deposited by the user are judged as genuine bank notes or doubtful bank notes, data for updating an account balance of the user regarding the doubtful bank notes, and, outputting, if bills deposited by the user are judged as counterfeit bank notes, data for not updating an account balance of the user regarding the counterfeit bank notes.

15. The Bill information process method according to claim 12, 13 or 14, comprising the further steps of
extracting first bill information on the deposited bills judged by the validator (3)
storing the first bill information together with information specific to the user in a storage device;
extracting second bill information by the validator (3) from bills judged as counterfeit bank notes or as doubtful in a previous validation step; and
searching the storage device with the second bill information as a key to obtain similar bill information.
